# EUROPÄISCHE PATENTSCHRIFT

(11) **EP 0 432 855 B1**
(45) Veröffentlichungstag und Bekanntmachung des Hinweises auf die Patenterteilung: **23.03.1994**
(21) Anmeldenummer: 90250105.5
(22) Anmeldetag: 27.04.1990
(51) Int. Cl.: B25G 3/06, F16B 21/09

(54) **Ausbildung in einem Werkstück zur Halterung eines Anfassstückes**
Arrangement in a work-piece for holding a connector-piece
Dispositif pour attacher un élément de fixation à une pièce

(30) Priorität: 14.12.1989 DE 3941585
(43) Veröffentlichungstag der Anmeldung: 19.06.1991
(73) Patentinhaber: EMPE-WERKE ERNST PELZ GmbH & CO. KG, 82538 Geretsried (DE)
(72) Erfinder: Pelz, Peter, D-8192 Geretsried 2/Obb. (DE)
(74) Vertreter: Goddar, Heinz J., Dr.

(56) Entgegenhaltungen:
- DE-U- 7 342 027
- DE-U- 8 134 106
- FR-A- 2 211 064
- FR-A- 2 519 745
- FR-A- 2 548 744
- GB-A- 2 027 382
- GB-A- 2 121 099
- US-A- 2 193 802
- US-A- 3 491 820
- US-A- 3 790 232
- US-A- 4 155 140
- US-A- 4 375 879
- US-A- 4 878 639

## Beschreibung

Die Erfindung betrifft ein Befestigungselement an einem Werkstück zur Halterung eines Anfaßstückes für die Befestigung von Zusatzteilen nach dem Oberbegriff von Anspruch 1 sowie ein Anfaßstück zur Verbindung mit einem solchen Befestigungselement nach dem Oberbegriff von Anspruch 5.

Ein derartiges Befestigungselement ist in DE-U 8 134 106 beschrieben. Das in dieser Druckschrift beschriebene Befestigungselement zum Halten mehrerer Abdeckplatten besteht aus einem Bodenteil und einer aus der Ebene der Abdeckplatte heraus aufgewölbten Fläche, die eine mit dem Bodenteil fluchtende, im wesentlichen gleichgeformte Einstanzung aufweist.

In DE-U-7 342 027 ist ein Anfaßstück zur Verbindung mit einem solchen Befestigungselement beschrieben, das eine Bodenplatte, einen Ringkragen und einen Hals zwischen der Bodenplatte und dem Ringkragen aufweist.

Der Erfindung liegt die Aufgabe zugrunde, für flächige Werkstücke die Möglichkeit zu schaffen, Zusatzteile leicht, aber fest einzusetzen, wobei diese Verbindung auch wieder ohne weiteres ohne Beschädigung des Werkstücks lösbar sein soll.

Erfindungsgemäß wird diese Aufgabe durch ein gattungsgemäßes Befestigungselement mit den kann reichnenden Merkmalen von Anspruch 1 gelöst.

Vorteilhafte Ausgestaltungen der Erfindung sind in den abhängigen Ansprüchen 2-4 angegeben.

Weiterhin sieht die Erfindung ein Anfaßstück zur Verbindung mit einem erfindungsgemäßen Befestigungselement mit den Merkmalen von Anspruch 5 vor.

Dabei kann das Halteteil entweder clipartig oder ring- oder hakenförmig ausgebildet sein.

Bevorzugt ist das erfindungsgemäße Anfaßstück aus Kunststoffmaterial oder Metall hergestellt.

Mit der vorliegenden Erfindung ist es möglich an beliebigen Stellen von Platten, Wänden, Tafeln oder anderen flächigen Werkstücken die Möglichkeit zu schaffen, Zusatzteile leicht, aber fest einzusetzen, wobei die entsprechende Verbindung ohne Beschädigung des Werkstückes wieder lösbar ist. Die beschriebenen taschenartig aufgewölbten Einstanzungen stellen dabei einen Einführungsweg für die einzusetzenden Haken, Ringe, Clipse oder anders ausgestalteten Anfaßstücke zur Verfügung, die mit ihrem scheibenförmigen unteren Ende in den Einführungsweg eingeschoben und unten und oben von den Randteilen des Einführungswegs gehalten werden. Damit das Befestigungsende des Anfaßstückes nicht wieder rückwärts ausweichen kann, wird in der Fläche des zungenförmigen Bodenteils, vorzugsweise vor oder am Beginn des engen Bereichs des Einführungsweges auf dem zungenförmigen stehengebliebenen Stück des Werkstückes ein quer verlaufender Stabriegel aufgewölbt, der das Zurücklaufen des eingeschobenen Anfaßstückes verhindert. Demselben Zweck dient auch eine fakultativ vorgesehene entsprechende Vertiefung im hinteren Teil des zungenförmigen Bodenteils zum Einrasten der Bodenplatte des Anfaßstückes. Zur besseren Halterung hat das Anfaßstück einen oberen Ringkragen, der auf der oberen Fläche der Aufwölbung des Werkstückes aufliegt. Oberhalb dieses Ringkragens trägt das Anfaßstück dann ein Halteteil in Form eines Hakens, einer Öse, eines Clips oder eines anderen zweckentsprechend gestalteten Endes.

Das Anfaßstück wird der Aufgabe entsprechend aus Kunststoff, Metall oder dergleichen hergestellt. Das Material des Werkstücks kann der besonderen Aufgabe entsprechend eine Holzfaserhartplatte, eine aus Faserkonstruktion bestehende Kunststoffplatte, eine Hartpappe, ein flächiger Kunststoff, eine Filzplatte sowie eine Platte aus Eisen oder einem anderen Metall sein.

Ein weiterer Vorteil des erfindungsgemäßen Befestigungselementes besteht darin, daß die für deren Herstellung notwendigen Verformungs- und Einstanzvorgänge in dem Werkstück bei Preßformteilen auf Fasermattenbasis und dergleichen bereits beim Preßformvorgang ohne besondere Bearbeitung in das betreffende plattenförmige Bauteil eingearbeitet werden können, woraus ein weiterer Kostenvorteil resultiert.

Erfindungsgemäß ausgebildete Werkstücke sind für vielfältige Einsatzzwecke denkbar, insbesondere aber im Bereich der Möbelindustrie von großem Vorteil.

Weitere Merkmale und Vorteile der Erfindung ergeben sich aus der nachfolgenden Beschreibung eines bevorzugten Ausführungsbeispiels der Erfindung, das anhand der beiliegenden Zeichnungen näher erläutert wird. Dabei zeigt
- Fig. 1: eine Draufsicht auf einen Ausschnitt eines mit dem erfindungsgemäßen Befestigungselement versehenen Werkstücks;
- Fig. 2: einen Schnitt durch Fig. 1 entlang der Linie A-B;
- Fig. 3: ein erfindungsgemäß ausgebildetes Anfaßstück in Seitenansicht;
- Fig. 4: die Schnittdarstellung von Fig. 2 mit eingesetztem Anfaßstück; und
- Fig. 5: eine Schnittdarstellung durch Fig. 1 entlang der Linie C-D.

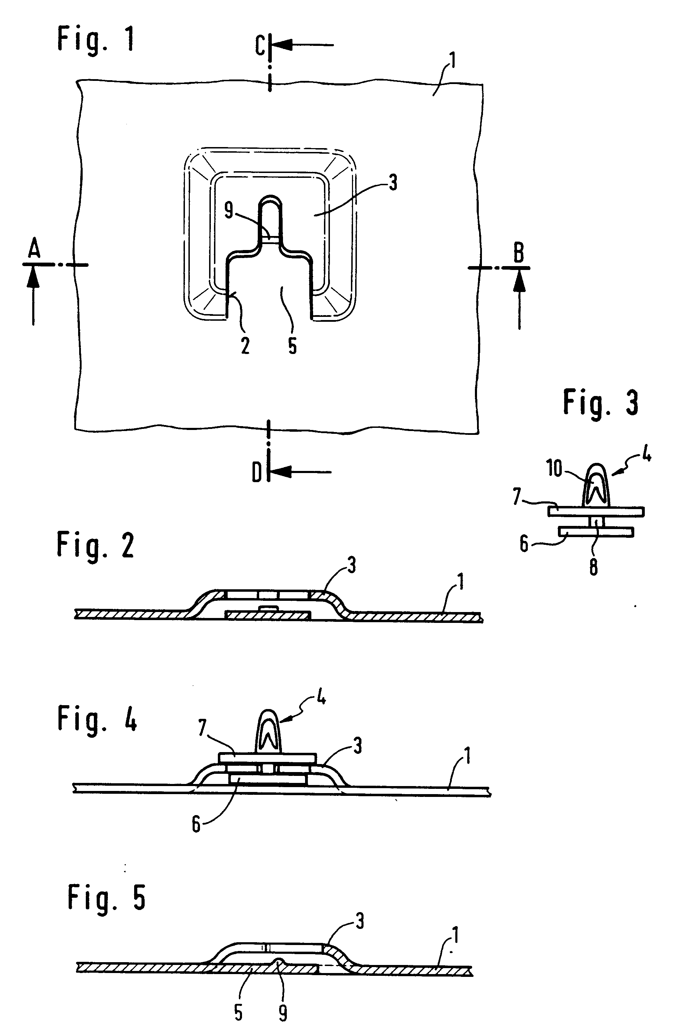

Fig. 1 zeigt einen Ausschnitt aus einem Werkstück 1, das eine Platte, Wand, Verkleidung oder dergleichen darstellen kann und auf dessen Fläche das erfindungsgemäße Befestigungselement vorgesehen ist, an dem Zusatz- oder Ausstattungsteile fest, aber leicht lösbar mittels eines Anfaßstückes, wie beispielsweise mittels eines mit Clip versehenen Bauteils 4 (Fig. 3) angebracht werden können. Für diesen Zweck erhält das Werkstück 1 an der entsprechenden Stelle eine aufgewölbte Fläche 3 mit einer zungenförmigen Einstanzung 2, wobei das durch den Einstanzvorgang entstehende, mit der Einstanzung 2 fluchtende, zungenförmige Bodenteil 5 im wesentlichen in der Grundebene des Werkstückes verbleibt. Der lichte Abstand zwischen der aufgewölbten Fläche 3 und dem Bodenteil 5 entspricht in etwa der Dicke einer Bodenplatte 6 des in Fig. 3 näher dargestellten Anfaßstückes 4. Die schnittartige Einstanzung 2 entspricht in ihrem vorderen Bereich im wesentlichen dem Durchmesser der erwähnten Bodenplatte 6 des Anfaßstückes 4 und im hinteren engen Bereich dem Durchmesser eines Halses 8 zwischen der Bodenplatte 6 und dem oberen Ringkragen 7 des Anfaßteiles 4. Der hintere enge Bereich der Einstanzung 2 dient zur Aufnahme des Halses 8 des Anfaßstückes 4, wobei die Höhe des Halses 8 im wesentlichen der Materialdicke des Werkstückes entspricht.

Am Beginn des hinteren engen Bereichs des zungenförmigen Bodenteils 5 ist eine querverlaufende, halbstabförmig aufgewölbte Erhöhung 9 vorgesehen, die dazu dient, das eingeschobene Anfaßteil 4 im hinteren engen Teil der Einstanzung 2 festzuhalten. Zur Verstärkung dieser Wirkung kann im hinteren engen Teil des Bodenteils 5 eine Vertiefung (nicht dargestellt) vorgesehen sein, in welche die Bodenplatte 6 des Anfaßstückes 4 einrastet.

An seinem freien Ende oder Halteteil 10 ist das Anfaßstück 4 so ausgestaltet, daß es zur Aufnahme und Befestigung der erwähnten Ausstattungs- oder Zusatzteile geeignet ist, indem es beispielsweise haken- oder ringförmig ausgebildet oder als Clip (Fig. 3) gestaltet ist.

Das ganze System ist denkbar einfach und effektiv und benötigt im Werkstück 1 nur die aufgewölbte Fläche 3, deren in der Fläche des Werkstücks stehengebliebenen zungenförmigen Bodenteil 5 und ggf. eine hochgedrückte Queraufwölbung 9, die ein Zurücklaufen des Anfaßteiles 4 aus dem hinteren engen Teil der Einstanzung 2 verhindert (Fig. 5). Als einziges Zubehör wird das Anfaßteil 4 (Fig. 3) benötigt, welches an seinem unteren Ende eine Bodenplatte 6 und davon durch einen Hals 8 getrennt einen oberen Ringkragen 7 aufweist, wodurch es im eingeschobenen Zustand festgehalten wird, während das obere freie Ende der Aufgabe und Form des zu haltenden Teiles entsprechend gestaltet ist.

Der große Vorteil der Erfindung liegt darin, daß nur ein einziges selbständiges Teil benötigt wird, da das erfindungsgemäße Befestigungselement zur Aufnahme desselben im Werkstück gleichzeitig mit dessen Herstellung in einem Arbeitsgang eingearbeitet werden kann.

Obwohl als hauptsächliches Anwendungsgebiet für die Erfindung die Möbelindustrie angesehen wird, kann die neuartige vorteilhafte Verbindung eines Werkstücks mit einem Zusatzteil auch in anderen Bereichen sinnvoll und vorteilhaft eingesetzt werden, beispielsweise zur Befestigung von Ausstattungs-oder Verkleidungsteilen in Fahrzeugen.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander.

## Patentansprüche

1. Befestigungselement an einem flächigen Werkstück zur Halterung eines Anfaßstückes für die Befestigung von Zusatzteilen, mit einem zungenförmig ausgebildeten Bodenteil (5) und einer aus der Ebene des Werkstücks (1) heraus aufgewölbten Fläche (3), die eine mit dem zungenartigen Bodenteil fluchtende, gleichgeformte Einstanzung (2) aufweist, dadurch **gekennzeichnet,** daß sowohl die Einstanzung (2) als auch das Bodenteil (5) einen vorderen breiten Bereich und einen hinteren engen Bereich aufweisen, wobei der hintere enge Bereich des zungenförmigen Bodenteils (5) im wesentlichen in der Ebene des vorderen breiten Bereichs liegt, und daß das Anfaßstück zwischen der taschenartig aufgewölbten Fläche (3), und dem in der Grundebene verbleibenden zungenförmigen Bodenteil (5) einschiebbar und festhaltbar ist.

2. Befestigungselement nach Anspruch 1, dadurch gekennzeichnet, daß der zungenförmige Bodenteil (5) eine quer zu seiner Längserstreckung verlaufende, halbstabartig aufgewölbte Erhöhung (9) aufweist.

3. Befestigungselement nach Anspruch 1 oder 2, dadurch gekennzeichnet, daß das zungenförmige Bodenteil (5) in seinem hinteren engen Bereich eine Vertiefung aufweist.

4. Befestigungselement nach einem der vorangehenden Ansprüche, da durch gekennzeichnet, daß die Aufwölbung (3) mit Ausnahme der Einstanzung (2) einen im wesentlichen quadratischen Umfang besitzt.

5. Anfaßstück zur Verbindung mit einem Befestigungselement gemäß einem der vorangehenden Ansprüche, bestehend aus einer Bodenplatte (6), einem Ringkragen (7) und einem Hals (8) zwischen der Bodenplatte und dem Ringkragen, dadurch gekennzeichnet, daß der Durchmesser der Bodenplatte (6) im wesentlichen der Breite des vorderen Bereichs der zungenförmigen Einstanzung (2) entspricht und ihre Dicke im wesentlichen mit dem lichten Abstand zwischen dem Bodenteil (5) und der aufgewölbten Fläche (3) der Ausbildung im Werkstück (1) übereinstimmt; der Durchmesser des oberen Ringkragens (7) größer ist als die Breite des hinteren engen Bereichs der Einstanzung (2); der Maximaldurchmesser des Halses (8) der Breite des hinteren engen Bereichs der Einstanzung (2) entspricht; und das Anfaßstück an seinem freien Ende, einen Halteteil (10) aufweist, welcher zur Aufnahme und Befestigung von Zusatzteilen, geeignet ist.

6. Anfaßstück nach Anspruch 5, dadurch gekennzeichnet, daß der Halteteil (10) clipartig ausgebildet ist.

7. Anfaßstück nach Anspruch 5, dadurch gekennzeichnet, daß der Halteteil (10) ring- oder hakenförmig ausgebildet ist.

8. Anfaßstück nach einem der Ansprüche 5 bis 7, dadurch gekennzeichnet, daß es aus Kunststoffmaterial oder Metall hergestellt ist.

## Claims

1. A securing element on a large-area article for retaining a holding member for the securing of attachments, comprising a tongue-like base part (5) and a surface (3) which is curved up from the plane of the article (1) and which is formed with a punched-in part (2) flush with the base part (5) and of the same shape as the latter, characterised in that both the punched-in part (2) and the base part (5) have a front wide zone and a rear narrow zone, the rear narrow zone of the base part (5) being disposed substantially in the plane of the front wide zone, and the holding member is introducible and retainable between the pocket-like curved-up surface (3) and the tongue-like base part (5) remaining in the base plane.

2. A securing element according to claim 1, characterised in that the base part (5) has a protuberance (9) which extends transversely to its length and which is curved up in half-round manner.

3. A securing element according to claim 1 or 2, characterised in that the base part (5) is formed with a recess in its rear narrow zone.

4. A securing element according to any of the previous claims, characterised in that the curved-up part (3) has a substantially square periphery except for the punched-in part (2).

5. A holding member for connection to the securing element according to any of the previous claims and comprising a baseplate (6), an annular collar (7) and a neck (8) between the baseplate (6) and the annular collar (7), characterised in that the diameter of the baseplate (6) corresponds substantially to the width of the front zone of the tongue-like punched-in part (2) and the thickness of the baseplate (6) substantially coincides with the internal distance between the base part (5) and the curved-up surface (3) of the construction in the article (1), the diameter of the top annular collar (7) is greater than the width of the rear narrow zone of the punched-in part (2), the maximum diameter of the neck corresponds to the width of the rear narrow zone of the punched-in part (2), and the holding member has at its free end a retaining part (10) adapted to receive and secure attachments.

6. A holding member according to claim 5, characterised in that the retaining member (10) is clip-like.

7. A holding member according to claim 5, characterised in that the retaining member (10) is annular or hooked.

8. A holding member according to any of claims 5 to 7, characterised in that it is made of a plastics material or metal.

## Revendications

1. Elément de fixation disposé sur une pièce de base plate pour retenir une pièce d'accrochage destinée à la fixation de pièces supplémentaires, comprenant une partie de fond (5) en forme de languette et une surface bombée (3) qui fait saillie du plan de la pièce de base (1) et qui comporte une découpe (2) coïncidant avec la partie de fond en forme de languette et sensiblement de forme identique à celle-ci, **caractérisé en ce que** aussi bien la découpe (2) que la partie de fond (5) comportent une zone avant large et une zone arrière étroite, la zone arrière étroite de la partie de fond (5) en forme de languette se trouvant sensiblement dans le plan de la zone avant large, et en ce que la pièce d'accrochage peut être emmanchée et immobilisée entre la surface bombée (3) en forme de poche et la partie de fond (5) en forme de languette subsistant dans le plan de base.

2. Elément de fixation selon la revendication 1, **caractérisé en ce que** la partie de fond (5) en forme de languette comporte une surépaisseur (9) qui s'étend transversalement à sa longueur et qui est bombée en forme de demi-jonc.

3. Elément de fixation selon la revendication 1 ou 2, **caractérisé en ce que** la partie de fond (5) en forme de languette comporte un renfoncement dans sa zone arrière étroite.

4. Elément de fixation selon l'une des revendications précédentes, **caractérisé en ce que**, à l'exception de la découpe (2), la partie bombée (3) possède un périmètre sensiblement carré.

5. Pièce d'accrochage destinée à être reliée à un élément de fixation conforme à l'une des revendications précédentes, comprenant une plaque de fond (6), une collerette annulaire (7) et un axe (8) disposé entre la plaque de fond et la collerette annulaire, **caractérisée en ce que** le diamètre de la plaque de fond (6) correspond sensiblement à la largeur de la zone avant de la découpe (2) en forme de languette, et son épaisseur coïncide sensiblement à l'écartement entre la partie de fond (5) et la surface bombée (3) réalisée dans la pièce de base (1) ; le diamètre de la collerette annulaire supérieure (7) est supérieur à la largeur de la zone arrière étroite de la découpe (2) ; le diamètre maximal de l'axe (8) correspond à la largeur de la zone arrière étroite de la découpe (2) ; et la pièce d'accrochage comporte, à son extrémité libre, une pièce de retenue (10) qui convient à la réception et à la fixation de pièces supplémentaires.

6. Pièce d'accrochage selon la revendication 5, **caractérisée en ce que** la pièce de retenue (10) est conçue à la façon d'un clip.

7. Pièce d'accrochage selon la revendication 5, **caractérisée en ce que** la pièce de retenue (10) se présente sous la forme d'un anneau ou d'un crochet.

8. Pièce d'accrochage selon l'une des revendications 5 à 7, **caractérisée en ce qu**'elle est fabriquée en matière plastique ou en métal.
